(19) Europäisches Patentamt
European Patent Office
Office européen des brevets

(11) Publication number: **0 284 385 A2**

(12) **EUROPEAN PATENT APPLICATION**

(21) Application number: 88302602.3

(22) Date of filing: 24.03.88

(51) Int. Cl.⁴: **C 08 L 65/04**
C 08 G 61/02, C 08 K 3/34,
C 08 K 13/04, C 08 K 9/06

(30) Priority: 26.03.87 JP 70308/87
26.03.87 JP 70309/87

(43) Date of publication of application:
28.09.88 Bulletin 88/39

(84) Designated Contracting States:
CH DE FR GB IT LI NL

(71) Applicant: MITSUI TOATSU CHEMICALS INC.
No. 2-5, Kasumigaseki 3-chome
Chiyoda-Ku Tokyo 100 (JP)

(72) Inventor: Katoh, Nobukatsu
Mitsui Takiharuryo 5, Takiharucho Minami-ku
Nagoya-shi Aichi-ken (JP)

Enomoto, Toshiyuki
6-42, Komachi 2-Chome
Kamakura-shi Kanagawa-ken (JP)

Yokoo, Tomohide
168-14, Togawa
Hatano-shi Kanagawa-ken (JP)

Hanaue, Kunio
5-3503-323, Shiomidai 3-Chome Isogo-ku
Yokohama-shi Kanagawa-ken (JP)

Izukawa, Tsukuru
2882-1-15, Lijimacho Sakae-ku
Yokohama-shi Kanagawa-ken (JP)

(74) Representative: Harvey, David Gareth et al
Graham Watt & Co. Riverhead
Sevenoaks Kent TN13 2BN (GB)

# (54) Aralkylphenolic resin molding material.

(57) An aralkylphenolic resin molding material comprises an aralkylphenolic resin prepared by reacting a compound represented by the general formula (I)

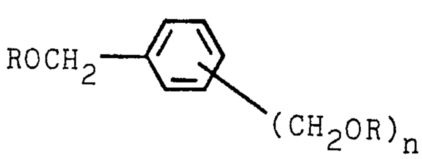 (I)

with a phenolic compound, mountain leather and optionally glass fiber being incorporated in the resin as inorganic filler materials.

The aralkylphenolic resin molding material contains no asbestos but has equal or better characteristics as compared with molding materials containing asbestos. In particular the present aralkylphenolic resin has excellent heat resistance, mechanical characteristics and electrical characteristics.

EP 0 284 385 A2

## Description

### "ARALKYLPHENOLIC RESIN MOLDING MATERIAL"

The present invention relates to a molding material which can be used for electrical and electronic parts, mechanical parts, kitchen parts and the like. More particularly, it relates to an aralkylphenolic resin molding material in which no asbestos is used as a filler and which has excellent heat resistance, mechanical strength, electrical characteristics and the like.

Aralkylphenolic resin molding materials have excellent heat resistance, mechanical strength and electrical characteristics, and therefore these materials are used as electrical and electronic parts, mechanical parts, automobile parts and the like which are exposed to severe conditions. Heretofore, in the aralkylphenolic resin molding materials suitable for these uses, asbestos and glass fiber have generally often been used as fillers.

However, asbestos dust might become a cause of lung cancer, and thus the continuous use of asbestos is undesirable in view of health, prevention of environmental pollution and protection of social circumstances. For this reason, it has been intensively demanded to develop aralkylphenolic resin molding materials having excellent heat resistance as well as mechanical and electrical characteristics without using asbestos.

It has been found that aralkylphenolic resin molding materials in which heat resistance is not impaired and in which the other excellent characteristics are maintained can be obtained by substituting mountain leather for asbestos, and on the basis of this finding, the present invention has been completed. That is, the present invention is directed to an aralkylphenolic resin molding material which comprises an aralkylphenolic resin, prepared by reacting a compound represented by the general formula (I)

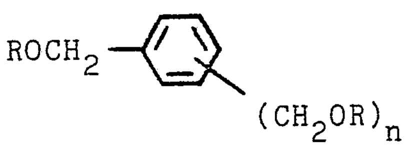

(I)

wherein R is an alkyl group having 1 to 6 carbon atoms or an acyl group having 2 to 6 carbon atoms, and n is an integer of 1 or 2,
with a phenolic compound, and fibrous mountain leather alone or together with glass fiber as an inorganic filler.

The invention will now be further explained, by way of Example only, with reference to certain embodiments thereof.

Typical examples of the compounds represented by the general formula (1) used in the present invention include α,α'-dimethoxy-p-xylene, α,α'-diethoxy-p-xylene, α,α'-diethoxy-o-xylene, α,α'-diethoxy-m-xylene, α,α'-diacetoxy-p-xylene, α,α'-dipropionyloxy-p-xylene, α,α'-diacetoxy-o-xylene, α,α'-diacetoxy-m-xylene, α,α',α"-trimethoxymesitylene, α,α',α"-trimethoxy-1,2,4-trimethylbenzene and α,α',α"-triacetoxy-mesitylene, and they can be used alone or as a mixture of two or more thereof.

The phenolic compound used in the present invention has one or more phenolic hydroxyl groups in its molecule, and examples of such phenolic compounds include phenol, o-cresol, m-cresol, p-cresol, 2,6-xylenol, catechol, resorcinol, isopropylcatechol, 2,2-bis(p-hydroxyphenyl)propane, bis(p-hydroxyphenyl)methane, p-ethylphenol, p-tert-butylphenol, p-tert-octylphenol, p-phenylphenol, m-phenylphenol, p-aminophenol, pyrogallol, phloroglucinol, α-naphthol, β-naphthol, phenanthrol and oxyanthracene, and they can be used alone or in a mixture of one or more thereof. Examples of the particularly preferable phenolic compounds include phenol, o-cresol, m-cresol, p-cresol, p-phenylphenol and 2,2-bis(p-hydroxyphenyl)propane.

A ratio of the phenolic compound to the compound represented by the general formula (I) can vary in a wide range but is prererably in the range of 1.3 to 3 in terms of molar ratio. For the reaction between the phenolic compound and the compound of the general formula (I), a catalyst may be used, and examples of the catalysts include stannic chloride, zinc chloride, stannous chloride, boron trifluoride, cupric chloride, cupric sulfate, mercuric sulfate, mercurous sulfate, mercuric chloride, mercurous chloride, silver sulfate, silver chloride, sodium hydrogensulfate and dialkyl sulfates having alkyl groups of 1 to 6 carbon atoms, and they can be used alone of in a mixture of two or more thereof. Furthermore, examples of the above-mentioned dialkyl sulfates include dimethylsulfuric acid, diethylsulfuric acid and diisopropylsulfuric acid.

The mountain leather used in the present invention can be defined as the generic term which represents clay minerals each having hydroxyl groups on the surface thereof. That is, examples of the mountain leather include sepiolite of hydrous magnesium silicate, attapulgite (or palygorskite) of hydrous magnesium silicate. The mountain leather is also called mountain cork or mountain wood.

This mountain leather has been utilized, for example, as a kind of soap, an atacid agent of folk medicines, and an absorbing material for dung and urine of pets in the form of toilet sand in an animal shed, and as demonstrated by these facts, the mountain leather is very safe and does not involve any hygienic problem.

When used, the mountain leather may be preferably treated with a liquid resin such as phnolic resin or epoxy resin, a solution in which such a resin is dissolved in a solvent such as an alcohol or a ketone, or (β-methoxyethoxy)silane, β-(3,4-epoxycyclohexyl)ethyltrimethoxysilane, γ-glycidoxy-propyltrimethoxysilane, γ-mercaptopropyltrimethoxysilane, γ-amino-propyltriethoxysilane, N-β-(aminoethyl)-γ-aminopropyl-trimethoxysilane.

In the present invention, glass fiber may be used together with the mountain leather. This glass fiber is not limited particularly, but generally the usable glass fiber has a diameter of 1 to 15 μm and a fiber length of 0.1 to 6 mm. Preferably, the glass fiber may be used after being surface-treated in common with the mountain leather.

When the fibrous mountain leather and the glass fiber are surface-treated, wetting properties to the aralkylphenolic resin are improved, and in particular, mechanical strength of products can be heighten effectively.

Even when the fibrous mountain leather is used alone or in combination with the glass fiber as an inorganic filler, the total amount of the mountain leather is preferably in the range of 20 to 80% by weight. If the total amount of the mountain leather deviates from this range, moldability will be bad and the mechanical strength of the molded articles will deteriorate. When the fibrous mountain leather is used together with the glass fiber, the ratio of the mountain leather/the glass fiber is preferably in the range of from 0.2 to 3.0. If this ratio is less than 0.2, a cylinder or a mold for molding will be worn in the molding step, and if it is more than 3.0, the mechanical strength of the molded articles will be poor.

If desired, to the molding material of the present invention, there may be further added, in the usual manner, another filler, a curing agent, a curing accelerator, a plasticizer, a lubricant, a pigment and the like which are usually used for the phenolic resin molding material. The molding material of the present invention described above can be widely applied to electrical and electronic parts, mechanical parts, automobile parts, kitchen parts and the like.

We can use present invention's molding material effectively mixed with common phenolic resins such as novolak- or resol-type phenolic resins which are prepared by condensing phenols which including phenol and cresol with aldehydes which including formaldehyde and furfural under existence of an acid or a base, provided that it does not reduce heat resistance.

## EXAMPLES

(Inorganic Filler)

As inorganic fillers, there was prepared sepiolite, attapulgite, asbestos, surface-treated sepiolite and attapulgite, glass fiber and asbestos for comparison.

(Surface Treatment with Coupling Agent)

To 100 parts by weight of each of sepiolite and attapulgite was added 1 part by weight of γ-aminopropyltriethoxysilane, and they are mixed and dispersed uniformly in order to prepare sepiolite (I) and attapulgite (I).

(Surface Treatment with Resin Solution)

To 100 parts by weight of each of sepiolite and attapulgite was added 5 parts by weight of a 20% by weight resol solution, and they were mixed and dispersed uniformly to prepare sepiolite (II) and attapulgite (II).

(Examples 1 to 18 and Comparative Examples 1 and 2)

Aralykylphenolic resin (Milex XL-225, made by Mitsui Toatsu Chemicals, Inc.), hexamethylenetetramine and other raw materials were mixed in proportions set forth in Table 1, and they were kneaded at 100 to 120°C by the use of a roll kneader in order to prepare sheet-like kneaded materials. Afterward, these kneaded materials were ground to obtain aralkylphenolic resin materials.

The thus obtained molding materials were molded by the use of an IR-45P injection molding machine made by Toshiba Machine Co., Ltd. under conditions that a cylinder temperature was from 95 to 50°C, a mold temperature was 175°C, and an injection pressure was from 800 to 1,300 kg/cm$^2$, thereby obtaining specimens. Performances of these specimens were inspected in accordance with JIS K-6911. The results are set forth in Table 1.

## Table 1

| Raw Material | Example 1 | 2 | 3 | 4 | 5 | 6 | 7 | 8 | 9 | 10 |
|---|---|---|---|---|---|---|---|---|---|---|
| | **Amount (parts by weight)** | | | | | | | | | |
| Milex XL-225 | 38 | 46 | 23 | 37 | 37 | 37 | 65 | 38 | 37 | 38 |
| Hexamethylenetetramine | 3 | 5 | 2 | 4 | 3 | 4 | 6 | 3 | 4 | 3 |
| Sepiolite | – | – | – | – | 60 | – | – | – | – | – |
| Sepiolite (I) | 55 | 45 | 70 | – | – | – | – | – | – | 27.5 |
| Sepiolite (II) | – | – | – | 55 | – | – | – | – | – | – |
| Attapulgite | – | – | – | – | – | – | – | – | 55 | – |
| Attapulgite (I) | – | – | – | – | – | 55 | 25 | – | – | – |
| Attapulgite (II) | – | – | – | – | – | – | – | 55 | – | – |
| Asbestos | – | – | – | – | – | – | – | – | – | – |
| Glass Fiber | – | – | – | – | – | – | – | – | – | 27.5 |
| Calcium Stearate | 1 | 1 | 2 | 1 | 1 | 1 | 1 | 1 | 1 | 1 |
| Calcium Oxide | 3 | 4 | 3 | 3 | 3 | 3 | 3 | 3 | 3 | 3 |
| | **Test Results** | | | | | | | | | |
| Bending Strength ($kg/mm^2$) | 8 | 8 | 7 | 8 | 7 | 8 | 8 | 8 | 6 | 14 |
| Tensile Strength ($kg/mm^2$) | 5 | 5 | 4 | 4 | 4 | 5 | 5 | 5 | 4 | 6 |
| Charpy Impact ($kgf \cdot cm/cm^2$) | 4 | 4 | 4 | 4 | 4 | 4 | 3 | 4 | 3 | 7 |
| Insulation Resistance (Ω) | $10^{11}$ | $10^{11}$ | $10^{11}$ | $10^{11}$ | $10^{11}$ | $10^{11}$ | $10^{11}$ | $10^{11}$ | $10^{11}$ | $10^{11}$ |
| Heat Resistance (°C) | 250 | 250 | 250 | 250 | 250 | 250 | 250 | 250 | 250 | 250 |

Table 1 (Cont'd)

| Raw Material | Example 11 | 12 | 13 | 14 | 15 | 16 | 17 | 18 | Comparative Example 1 | 2 |
|---|---|---|---|---|---|---|---|---|---|---|
| | Amount (parts by weight) | | | | | | | | | |
| Milex XL-225 | 46 | 23 | 37 | 37 | 37 | 65 | 38 | 37 | 37 | 37 |
| Hexamethylenetetramine | 5 | 2 | 4 | 3 | 4 | 6 | 3 | 4 | 4 | 4 |
| Sepiolite | - | - | - | 25 | - | - | - | - | - | - |
| Sepiolite (I) | 22 | 35 | - | - | - | - | - | - | - | - |
| Sepiolite (II) | - | - | 40.5 | - | - | - | - | - | - | - |
| Attapulgite | - | - | - | - | - | - | - | 18.3 | - | - |
| Attapulgite (I) | - | - | - | - | 45.8 | 12.5 | - | - | - | - |
| Attapulgite (II) | - | - | - | - | - | - | 33 | - | - | - |
| Asbestos | - | - | - | - | - | - | - | - | 55 | 27.5 |
| Glass Fiber | 22 | 35 | 14.5 | 35 | 9.2 | 12.5 | 22 | 36.7 | - | 27.5 |
| Calcium Stearate | 1 | 2 | 1 | 1 | 1 | 1 | 1 | 1 | 1 | 1 |
| Calcium Oxide | 4 | 3 | 3 | 3 | 3 | 3 | 3 | 3 | 3 | 3 |
| | Test Results | | | | | | | | | |
| Bending Strength ($kg/mm^2$) | 14 | 13 | 14 | 13 | 14 | 14 | 14 | 12 | 7 | 13 |
| Tensile Strength ($kg/mm^2$) | 6 | 5 | 5 | 5 | 6 | 6 | 6 | 5 | 4 | 5 |
| Charpy Impact ($kgf \cdot cm/cm^2$) | 7 | 7 | 7 | 7 | 7 | 6 | 7 | 6 | 4 | 7 |
| Insulation Resistance ($\Omega$) | $10^{11}$ | $10^{11}$ | $10^{11}$ | $10^{11}$ | $10^{11}$ | $10^{11}$ | $10^{11}$ | $10^{11}$ | $10^{11}$ | $10^{11}$ |
| Heat Resistance (°C) | 250 | 250 | 250 | 250 | 250 | 250 | 250 | 250 | 250 | 250 |

The results in Table 1 indicate that the aralkylphenolic resin molding materials of the present invention have

equal or more excellent performances, as compared with those containing conventional asbestos, and it is apparent that the molding materials of the present invention are excellent in heat resistance as well as mechanical and electrical characteristics.

**Claims**

1. An aralkylphenolic resin molding material which comprises an aralkylphenolic resin, prepared by reacting a compound represented by the general formula (I)

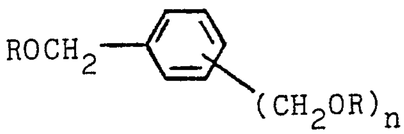

(I)

wherein R is an alkyl group having 1 to 6 carbon atoms or an acyl group having 2 to 6 carbon atoms, and n is an integer of 1 or 2,
with a phenolic compound, and mountain leather is included as an inorganic filler.

2. An aralkylphenolic resin molding material according to claim 1, wherein said inorganic filler comprises said mountain leather and glass fiber.

3. An aralkylphenolic resin molding material according to claim 1 or claim 2, wherein said mountain leather is contained in an amount of 20 to 80% by weight.

4. An aralkylphenolic resin molding material according to claim 2, wherein the total amount of said mountain leather and said glass fiber is in the range of 20 to 80% by weight, and the weight ratio of mountain leather/glass fiber is from 0.2 to 3.0.

5. An aralkylphenolic resin molding material according to any one of claims 1 to 4, wherein said mountain leather has been surface-treated with a liquid resin, a solution of a resin, or a silane coupling agent.

6. An aralkylphenolic resin molding material according to claim 2 or claim 4, wherein the glass fiber has been surface treated with a liquid resin, a solution of a resin or a silane coupling agent.

7. A method of making an aralkylphenolic resin molding material which comprises reacting a compound represented by the general formula (I)

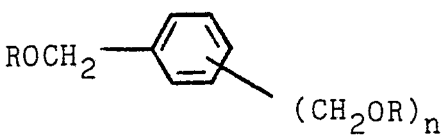

(I)

wherein R is an alkyl group having 1 to 6 carbon atoms or an acyl group having 2 to 6 carbon atoms, and n is an integer of 1 or 2,
with a phenolic compound, and incorporating mountain leather as an inorganic filler in the reaction product, alone or in association with another filler such as flass fiber.

8. A method according to claim 7, wherein said mountain leather is incorporated in an amount of 20 to 80% by weight and, when glass fiber is present it is added in an amount such that the weight ratio of mountain leather/glass fiber is from 0.2 to 3.0.

9. A method according to claim 7 or claim 8, wherein the mountain leather, and the glass fiber when used, is subjected to a surface treatment with a liquid resin, a solution of a resin or a silane coupling agent before incorporation in the reaction product.

10. A molded article made from the material according to any of claims 1 to 6 or from the material made by the method according to any of claims 7 to 9.